# EUROPÄISCHE PATENTSCHRIFT

(11) **EP 2 586 526 B1**
(45) Veröffentlichungstag und Bekanntmachung des Hinweises auf die Patenterteilung: **04.01.2017**
(21) Anmeldenummer: 12401009.1
(22) Anmeldetag: 26.01.2012
(51) Int. Cl.: B01J 20/24, B01J 20/28, B01J 20/30, E02B 15/10, C09K 3/32, C02F 1/40, C02F 101/32, C02F 103/00, C02F 1/28

(54) **ABSORPTIONSMITTEL, DAS DEN SÄTTIGUNGSGRAD ANZEIGT**
ABSORPTION MATERIAL THAT INDICATES THE SATURATION LEVEL
MOYEN D'ABSORPTION, LEQUEL AFFICHE LE DEGRÉ DE SATURATION

(30) Priorität: 27.01.2011 DE 102011000349
(43) Veröffentlichungstag der Anmeldung: 01.05.2013
(73) Patentinhaber: Papier in Form und Farbe GmbH, 09496 Marienberg (DE); Technische Universität Chemnitz, 09111 Chemnitz (DE)
(72) Erfinder: Nehrkorn, Arnd, 09111 Chemnitz (DE); Brand, Joachim, 09496 Marienberg (DE); Goedel, Werner, 09116 Chemnitz (DE)
(74) Vertreter: Thomas, Matthias

(56) Entgegenhaltungen:
- WO-A1-99/18838
- DE-A1- 2 343 990
- DE-T2- 69 821 999
- GB-A- 950 702
- US-A- 3 080 688
- US-A- 3 109 703
- US-A- 3 854 481
- US-A- 5 676 839

## Beschreibung

Die Erfindung betrifft ein Absorptionsmittel, das vor, während und nach Sorptionsvorgängen den Sättigungsgrad anzeigt. Die Erfindung betrifft insbesondere ein Absorptionsmittel, das auf Wasser schwimmen kann und seinen Sättigungsgrad durch äußere Merkmale anzeigt.

Häufig stellt sich die Aufgabe, möglichst einfach und vor Ort zu erkennen, ob ein Absorptionsmittel mit der aufzunehmenden Substanz gesättigt ist, und somit eine weitere Zugabe an Absorptionsmittel bzw. sein Austausch notwendig ist, oder ob die aufgebrachte Menge an Absorptionsmittel noch ausreichend ist, um weitere Substanz zu binden.

In der Industrie ist eine Vielzahl von Absorptionsmitteln bekannt. Solche Absorptionsmittel können aus Substanzen bestehen, in denen sich die aufzunehmende Substanz löst. Es können ebenso poröse Körper mit Hohlräumen sein, in denen sich die aufzunehmende Substanz aufgrund von Kapillarkräften einlagert.

Zur Anzeige des Sättigungsgrades des Absorptionsmittels dient in vielen Fällen ein Farbumschlag eines Indikators, der dem Absorptionsmittel zugesetzt ist. Zum Beispiel wird amorphem Siliciumdioxid (Silicagel), welches zur Wasseraufnahme verwendet wird, Cobalt(II)-chlorid zugesetzt. Dieses ist ohne Kristallwasser nahezu farblos, im hydratisierten Zustand hingegen stark blau gefärbt. Das heißt, nach Sättigung des Kieselgels erfolgt eine Einlagerung überschüssigen Wassers in den Kristallverband des Cobalt(II)-chlorids und ein Farbumschlag. Bei porösen Materialien kann man einen Farbumschlag auch dadurch erreichen, dass das gesättigte Absorptionsmittel eine geringere Lichtstreuung aufweist, als das ungesättigte, und somit tiefer liegende (eingefärbte) Bereiche vor einer Sättigung unsichtbar und nach Sättigung sichtbar sind.

Häufig stellt sich die Aufgabe, ölige Schadstoffe, welche auf einer Wasseroberfläche schwimmen, aufzunehmen. Dies ist zum Beispiel oft der Fall, wenn nach einer Havarie Schadstoffe in die Umwelt gelangt sind oder in industriellen Tauchbädern, welche durch Verunreinigungen auf den zu behandelnden Objekten nach und nach ölig verschmutzen. Dies wird häufig durch schwimmende Absorptionsmittel bewerkstelligt.

Bei den allgemein bekannten großflächigen Ölhavarien in Gewässern werden gewöhnlich schwimmende Ölbarrieren eingesetzt, die vor allem im Randbereich eines Ölteppichs dessen weiteres Ausbreiten verhindern sollen.

Ein Vorschlag aus DE 42 22 438 A1 sieht eine Verbesserung solcher Ölbarrieren dergestalt vor, dass die Barriere teilweise absorbierend ausgestaltet wird und mithin Öl aufnehmen kann. Hierzu wird die Ölbarriere mit Faserstoffen gefüllt, von denen ein Teil hydrophob und ein Teil hydrophil ausgerüstet ist. Durch eine bestimmte Anordnung und eine besondere äußere Form der Schwimmbarriere soll gegenüber herkömmlichen Schwimmbarrieren durch die zusätzliche Absorption eine vorteilhafte Wirkung erreicht werden.

Die Aufnahme von Schadstoffen in der Fläche kann beispielsweise durch schwimmende Absorptionsmittel bewerkstelligt werden.

Neben dem Einsatz von Absorptionsmitteln zum Binden von öligen Verunreinigungen in offenen Gewässern können schwimmende Absorptionsmittel unter an sich gleichen Bedingungen auch im Rahmen technischer Reinigungsverfahren eingesetzt werden. Die verunreinigte Flüssigkeit muss nicht notwendig Wasser sein.

Ein Vorschlag in DE 23 43 990 A sieht schwimmende, verankerte Behälter vor, in die durch eine poröse Seitenwand an der Flüssigkeitsoberfläche schwimmende Schadstoffe eindringen können. Diese Behälter nehmen absorbierte Substanzen über seitlich angeordnete Öffnungen auf. Mit zunehmender Absorption sollen die Behälter tiefer in die Flüssigkeit einsinken, so dass die Eintauchtiefe als Maß für den Füllungsgrad ansehbar ist.

In US 5 676 839 A ist ein ähnlich arbeitendes, aus 3 Komponenten bestehendes Absorptionsmittel beschrieben. Eine erste Komponente ist ein geschlossenporiger Schaumstoffkörper, der ausschließlich als Schwimmkörper fungiert. Eine zweite Komponente besteht aus einer Mehrzahl streifenförmiger Zuschnitte aus unbehandeltem offenporigem Schaumstoff als eigentliches Absorptionsmittel. Schließlich dient ein in den Schaumstoffkörper integriertes Massestück als dritte Komponente der Einstellung einer bevorzugten Lage des Absorptionsmittels.

Das genannte Absorptionsmittel soll mit zunehmendem Absorptionsgrad tiefer in die Flüssigkeit einsinken. Die maximale Sättigung soll an Hand einer Markierung am geschlossenporigen Schaumstoffkörper feststellbar sein.

In US 3 109 703 A und US 3 080 688 A sind Vorschläge zur Herstellung ebener mehrlagiger Gebilde aus absorbierenden Stoffen enthalten.

In WO 99 18 838 A1 ist ein quaderförmiges Reinigungsgerät (Schwamm) beschrieben, das im Wesentlichen aus einem absorbierenden Kern und einem den Kern einfassenden flüssigkeitsdurchlässigen Überzug besteht. Ein solches Reinigungsgerät ist im trockenen Zustand schwimmfähig. Ein Einsatz als Absorptionsmittel ist a priori nicht vorgesehen.

Ein Vorschlag gemäß GB 950 702 A betrifft ringförmig ausgeführte Reinigungspads, die aus einem schlauchförmigen netzähnlichen Flächengebilde durch Aufrollen gewickelt werden.

In US 3 854 481A ist vorgeschlagen, Flächengebilde durch Falten und Wickeln zu einem zylindrischen Tampon zu formen. Falt- und Wickelvorgang sind so ausgestaltet, dass an der Spitze des Tampons Hohlräume entstehen, die die Dichte reduzieren und die Aufnahmefähigkeit in diesem Bereich erhöhen sollen.

In DE 698 21 999 T2 ist ein Tampon beschrieben, der wenigstens aus einer inneren absorbierenden Struktur und einer einschließenden Hülle besteht. Die Hülle soll mehrschichtig sein und vor allem an der Außenseite eine verringerte Aufnahmefähigkeit für Flüssigkeit haben.

Die genannten Tampons sind so ausgelegt, dass sie aufzunehmende Flüssigkeiten schnell in das Innere derselben leiten. Die Außenflächen hingegen sollen eher trocken bleiben.

Im Prinzip können zur Anzeige der Sättigung des Absorptionsmittels auch hier die oben genannten Verfahren angewendet werden. Es ergibt sich jedoch darüber hinaus auch die Möglichkeit, die sich spontan einstellende Orientierung speziell geformter, schwimmender Absorptionsmittel zu nutzen. Eine solche Möglichkeit ist die Verwendung einer speziellen doppelwandigen Kapsel, die mit Absorptionsmittel gefüllt ist. Die Kapsel ändert ihre Lage durch eine Dichteänderung des Absorptionsmittels während des Absorptionsprozesses. Der Aufbau und die Wirkungsweise einer solchen Kapsel sind in DE 10 2005 009 420 B4 beschrieben worden.

Die Verwendung einer mit Absorptionsmittel gefüllten doppelwandigen Kapsel birgt jedoch große Nachteile. Die Kontaktfläche des Absorptionsmittels zum zu absorbierenden Medium ist stark verringert. Dadurch wird die Aufnahmegeschwindigkeit herabgesetzt. Zum anderen ist durch die Verwendung einer doppelwandigen Kapsel ein großer Material- und Arbeitsaufwand für die Herstellung der Kapsel erforderlich. Ein Einbinden des Absorptionsmittels in die oben genannte Kapsel erscheint daher nicht praktikabel.

Es ist deshalb Aufgabe der Erfindung, ein zu einem Körper geformtes Absorptionsmittel zu entwickeln, welches ohne eine speziell herzustellende Kapsel auskommt und eine möglichst große Kontaktfläche zur Umgebung aufweist. Ferner ist es Aufgabe der Erfindung, ein Absorptionsmittel zu entwickeln, das möglichst einfach und vor Ort erkennen lässt, ob das Absorptionsmittel mit der aufzunehmenden Substanz gesättigt ist.

Das Wesen der Erfindung ergibt sich aus den Merkmalen der Schutzansprüche, der Beschreibung und der Ausführungsbeispiele. Ausführungsbeispiele und Zeichnungen geben dabei am Anmeldetag bevorzugte Formen wieder und beschränken den Schutzbereich der Erfindung nicht.

In der nachfolgenden Beschreibung, dem Ausführungsbeispiel und den Patentansprüchen werden die nachfolgenden Begriffe mit den nachstehend aufgeführten Sinngehalten verwendet:
Dichte - eines Materials ist im Allgemeinen der Quotient aus seiner Masse und seines Volumens.

Lokale Dichte - ist der Quotient aus Masse und Volumen eines Materials, berechnet für ein möglichst klein gewähltes Volumen mit homogenen Eigenschaften

Globale Dichte - ist der Quotient von Masse und Volumen eines ausgedehnten Körpers, gemittelt über Bereiche, welche sich in ihrer lokalen Dichte voneinander unterscheiden können. Die globale Dichte eines Körpers ergibt sich aus den nach den Volumina gewichteten Mittelwerten der lokalen Dichte.

Absorption - ist die Fähigkeit einer Substanz, in einen Körper selbsttätig einzudringen, gegebenenfalls unter Verdrängung anderer in diesem Körper befindlicher Substanzen.

Schwimmfähigkeit auf einer Flüssigkeit - ist gegeben, wenn die Dichte dieser Flüssigkeit größer ist als die Dichte eines vorgegebenen Körpers oder einer Substanz.

Porosität - ist der Volumenanteil an zugänglichen Hohlräumen in einem Material.

Packungsdichte - ist das Verhältnis vom Volumen des zugeführten Materials zum zur Verfügung stehenden Volumen.

Sättigungsgrad - ist das Verhältnis von aufgenommener Substanzmenge zur maximal aufnehmbaren Substanzmenge.

Sättigung - ist der Zustand bei dem ein Köper die maximal aufnehmbare Substanzmenge aufgenommen hat. Der Sättigungsgrad ist in diesem Fall 1.

Cellulosehaltige Materialien - sind Materialien, welche Cellulose beinhalten. Dies sind alle Materialien, welche mehrere mit einander verknüpfte Cellobiose-Einheiten beinhalten. Dies können Zellstoffwatte oder verschiedene andere Materialien wie zum Beispiel Baumwolle, Altpapier, Stroh oder Holzspäne sein.

Ein Absorptionsmittel wird durch ein formgebendes Verfahren so zu einem Körper geformt, dass sich wenigstens zwei Bereiche ausbilden, deren globale Dichte sich bei Aufnahme einer Substanz in unterschiedlichem Maße ändern kann. Hierzu wird auch der Fall gezählt, bei dem sich die Dichte eines Bereiches ändert, die eines anderen jedoch nicht oder nur unwesentlich.

Das Absorptionsmittel schwimmt auf Wasser und nimmt eine bestimmte Orientierung ein.

Dazu ist das erfindungsgemäße Absorptionsmittel in einer geometrisch bestimmten Form ausgeführt, wodurch es aufgrund seiner Form und/oder Dichteverteilung diskriminierbar ist.

Durch die Aufnahme eines zu absorbierenden Stoffes, beispielsweise Öl, ändert sich die Verteilung der globalen Dichte im Formkörper und seine Orientierung. Diese Orientierungsänderung lässt sich bei einer geeigneten Form leicht erkennen und kann als Indiz für den Sättigungsgrad des Absorptionsmittels genutzt werden. Wird der Formkörper zusätzlich mit einer geeigneten Vorrichtung, wie zum Beispiel einer Öse versehen, kann die Orientierungsänderung dieser Vorrichtung verwendet werden, um zwischen unterschiedlich stark gesättigten Formkörpern zu unterscheiden und diese in einem mehr oder minder automatisierten Verfahren selektiv abzusammeln.

Eine Orientierungsänderung des Absorptionsmittels ist als Veränderung des Neigungswinkels einer durch die Geometrie des Körpers definierten Achse oder Ebene im Bezug auf die Erdoberfläche zu verstehen.

Nur unter Aufwendung weiterer Maßnahmen, wie zum Beispiel Pressen, Schleudern, Auswaschen oder Herauslösen können aufgenommene Substanzen aus diesem Körper wieder entfernt werden. In der Regel hat ein Körper nur ein begrenztes Aufnahmevermögen für die absorbierte Substanz. Nimmt ein Köper keine weitere Substanz auf, auch wenn er in Kontakt mit einem Überschuss dieser Substanz steht, bezeichnet man ihn als vollständig gesättigt. Das Verhältnis von aufgenommener Substanzmenge zur maximal aufnehmbaren Substanzmenge bezeichnet man als Sättigungsgrad.

Die bei der Herstellung verwendeten Materialien bestimmen stark die Eigenschaften des Absorptionsmittels. Durch eine Modifizierung dieser Materialien kann z. B. eine stärkere Selektivität des Absorptionsmittels erreicht werden. Zum Beispiel kann ein Cellulosevlies hydrophobiert werden. Dies bedeutet, nach einer Behandlung von Cellulose mit einem geeigneten Mittel stellt sich beim Aufsetzen eines Wassertropfens ein größerer Kontaktwinkel an einer Dreiphasenkontaktlinie ein, als bei unbehandelter Cellulose. Dies bedeutet, die Cellulose wird von Wasser weniger stark benetzt. Im Regelfall bedeutet dies auch, dass die Selektivität der Benetzung stärker zugunsten organischer Substanzen verschoben wird. Eine starke Benetzung des Absorptionsmittels mit der zu absorbierenden Substanz, wenn es sich um eine Flüssigkeit handelt, ist wünschenswert. Besonders wünschenswert ist es, wenn die aufzunehmende Flüssigkeit auf der Oberfläche spreitet und diese damit vollständig benetzt, Wasser hingegen einen möglichst hohen Kontaktwinkel bildet.

Eine weitere wichtige Größe bei einem Absorptionsmittel stellt die Porosität dar. Das gleiche Material kann bei unterschiedlich hoher Porosität unterschiedlich viel zu absorbierende Substanz aufnehmen. Durch Absorption einer Substanz in einem porösen Festkörper ändert sich seine globale Dichte. Diese globale Dichteänderung ist eine Funktion der Dichte der aufgenommenen Substanz und der Porosität des Festkörpers. Daher können unterschiedliche Porositäten dazu genutzt werden, um in einem Material bei Absorption einer Substanz verschieden starke Dichteänderungen zu verursachen.

Ähnlich wie bei einer unterschiedlichen Porosität kann auch eine unterschiedliche Packungsdichte eine Variation der Aufnahmefähigkeit bzw. Porosität bzw. Änderung der globalen Dichte bei Absorption bewirken. Hierbei sind unter 'Porosität' zugängliche Hohlräume, die mehr oder minder vor der Formung des Körpers im zugeführten Material vorhanden sind oder durch eine Behandlung des Absorptionsmittels im Material entstehen, gemeint. Das heißt, es können durch Formen des Körpers zusätzliche Hohlräume entstehen, zum Beispiel zwischen verschiedenen Bahnen des zugeführten Materials. Ein stärker gepackter Bereich stellt somit - genauso wie ein aus geringer porösem Material aufgebauter Bereich - einen Bereich dar, der einen geringeren Anteil an zugänglichen Hohlräume aufweist. Wird ein Körper z.B. durch Aufwickeln oder Verpressen von Bahnen, Flocken oder Fasern geformt, kann man durch eine Variation der Stärke des Aufwickelns oder Pressens erreichen, dass der entstehende Körper aus Bereichen besteht, in denen das Material unterschiedlich stark gepackt ist. Unter Stärke des Aufwickelns ist sowohl zu verstehen, dass das Material unter unterschiedlicher Zugspannung zugeführt wird, als auch, dass der Körper während des Wickelns durch geeignete Vorrichtungen seitlich begrenzt wird.

Verschieden starke Dichteänderungen in einem Material können sich auch durch eine verschiedene Quellbarkeit der verwendeten Materialien ergeben. Bei einer Quellung eines Materials wird eine Substanz oder ein Substanzgemisch in einem Material gelöst, wodurch sich das Volumen dieses Materials erhöht. Dies bedeutet, dass nicht schon bestehende Hohlräume gefüllt werden, sondern auf molekularer Ebene die zu absorbierende Substanz eingelagert wird. Zum Beispiel kann sich bei Gelatine Wasser an polare Gruppen anlagern. Dadurch wird die Struktur der Gelatine gestört und das Gesamtvolumen erhöht. Eine Quellung von Stoffen ist nicht auf eine Quellung von Gelatine durch Wasser begrenzt. Eine Vielzahl von anderen Substanzen kann Quellen, zum Beispiel Öle und hydrophobe Polymere oder die Quellung von Ton durch Wasser.

In seiner einfachsten Form besteht der Formkörper nur aus einem aufgewickelten Material, welches in unterschiedlichen Bereichen unterschiedlich dicht gepackt wird. Darüber hinausgehend sind je nach Anwendung und verwendetem Absorptionsmittel die folgenden Variationen von Vorteil.

Anstelle einer Formgebung durch Aufwickeln sind weitere Verfahren möglich:
a) Langfasern lassen sich auch durch Filzen, Weben oder Stricken zu Körpern formen.
b) Fasern, Granulate oder Pulver, welche sich nicht wickeln lassen oder bei denen das Wickeln nicht von Vorteil ist, lassen sich durch Verpressen, Verkleben oder Versintern zu Körpern formen.

Weist das Absorptionsmittel eine geringe mechanische Stabilität auf, ist es vorteilhaft, es durch Ummanteln (z. B. durch eine Hülle aus Gewebe, gelochter Folie oder einen Drahtkäfig) oder das Einbringen interner Verstärkungselemente (z.B. eingewickelte Langfasern oder Gewebestücke) zu stabilisieren. Hierbei besteht keine Notwendigkeit, eine solche Ummantelung oder Verstärkung doppelwandig auszuführen. Die Ummantelung oder Verstärkung kann auch aus Material bestehen, welches das zu absorbierende Medium aufnehmen kann, dies ist aber nicht zwingend notwendig, solang der Transport der aufzunehmenden Substanz zum Absorptionsmittel möglich ist.

Eine räumliche Variation der Aufnahmefähigkeit des Absorptionsmittels kann man nicht nur durch unterschiedliche Packungsdichte sondern auch dadurch erreichen, dass seine Benetzbarkeit oder Quellbarkeit räumlich variiert wird. Z. B. indem Cellulose unterschiedlich stark hydrophobiert wird. Dies kann genutzt werden um die durch Variation der Dichte hervorgerufenen Effekte zu verstärken, kann aber auch anstelle einer Variation der Packungsdichte verwendet werden.

Zum Erreichen eines unterschiedlichen Aufnahmevermögens kann Füllmaterial, wie zum Beispiel Sand, Schaumpartikel oder aufschäumbare Partikel, beigemengt werden.

An dem Absorptionsmittel kann eine Vorrichtung, welche ein automatisches Absammeln ermöglicht, angebracht sein.

Dies kann im einfachsten Fall z. B. ein Haken, eine Öse oder ein Draht sein.

Von Vorteil ist eine Vorrichtung, welche das Diskriminieren zwischen verschiedenen Sättigungsgraden ermöglicht. Das Diskriminieren zwischen verschiedenen Sättigungsgraden stellt zum Beispiel eine Unterscheidbarkeit zwischen einem Absorptionsmittel, welches bereits zu absorbierende Substanz aufgenommen hat, und einem Absorptionsmittel, welches noch nichts absorbiert hat, dar.

So kann die Orientierungsänderung des Absorptionsmittels dazu genutzt werden, dass sich ein Haken bei einem Absorptionsmittel vor der Aufnahme einer Substanz unterhalb einer Wasseroberfläche befindet und nach der Aufnahme oberhalb.

In seiner einfachsten Ausführung hat das Absorptionsmittel eine rotationssymmetrische Form, deren Länge, gemessen parallel zur Symmetrieachse, länger ist als ihre Breite, gemessen senkrecht zur Symmetrieachse. Zum Beispiel eine Ei- oder Tropfenform. Sein Absorptionsvermögen ist quer zur Rotationsachse gesehen einheitlich und nimmt entlang der Symmetrieachse gesehen monoton zu- bzw. ab. Die Form des Absorptionsmittels ist aber nicht auf diese Ausführungsform beschränkt. Denkbar sind auch Pyramiden- oder Kegelformen. Möglich ist auch eine Kugelform, sofern man die Orientierungsänderung durch ein örtlich variierendes Erscheinungsbild der Kugeloberfläche erkennen kann. Ein örtlich variierendes Erscheinungsbild der Kugeloberfläche kann sich allein schon aus der unterschiedlichen Packungsdichte des Absorptionsmittels ergeben. Man kann es aber auch durch entsprechendes Einfärben erreichen. Ebenso kann auch das Absorptionsvermögen quer zur Symmetrieachse einen Gradienten aufweisen zum Beispiel von außen nach innen oder von einer zur anderen Seite monoton steigend. Ein örtlich variierendes Erscheinungsbild ist nicht auf die genannten Fälle begrenzt.

Die Erfindung wird nachstehend an Hand mehrer Ausführungsbeispiele und Zeichnungen näher erläutert. Es zeigen:

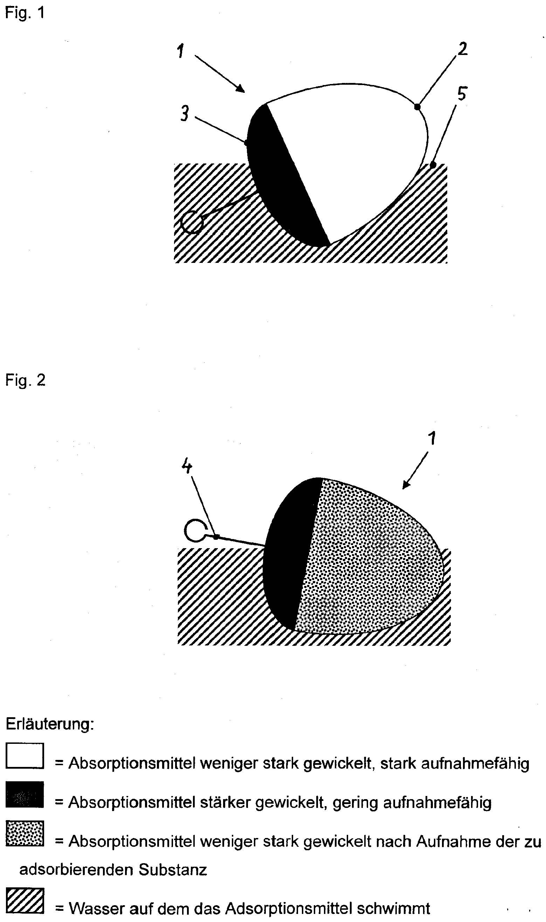

Fig. 1 - Das erfindungsgemäße Absorptionsmittel vor Beginn eines Absorptionsvorganges in Wasser schwimmend.
Fig. 2 - Das erfindungsgemäße Absorptionsmittel am Schluss eines Absorptionsvorganges in Wasser schwimmend.

Zellstoffwatte wird in Spaltbahnen zerteilt. Eine solche Spaltbahn wird einer Wickeleinrichtung zugeführt und dort von einem Stift erfasst, sodass sich die Bahn um den Stift aufwickelt. Durch eine um den Stift herum befindliche Schablone wird der sich bildende Wickelkörper während des Wickelns seitlich so eingeschränkt, dass er die erwünschte Form, zum Beispiel die Form eines Eis erhält. Durch seitliches Verschieben der Bahnzuführung, beziehungsweise Falten oder Kräuseln der zugeführten Bahn wird erreicht, dass der Formkörper **1** an den gewünschten Bereichen stärker beziehungsweise weniger stark gewickelt wird. Während des Wickelns wird ein wasserbasierter Kleber (Methylcellulose bzw. Polyvinylalkohol) auf das Spaltband bzw. den Formkörper **1** aufgebracht.

Der entstandene Formkörper **1** hat eine annähernde Eiform mit einer ausgeprägten Spitze **2** und einer abgeflachten Basis **3**.

Nach Beenden des Wickelvorgangs wird der Stift aus dem Formkörper 1 gezogen, der Formkörper **1** aus der Schablone ausgestoßen und getrocknet.

Während des Wickelns, vor oder nach dem Trocknen, gegebenenfalls auch erst nach weiteren Behandlungsschritten, wird in den Formkörper **1** im Bereich der Basis **3** ein Haken **4** eingesetzt.

Der getrocknete Formkörper **1** wird durch Einbringen in siedendes Acetanhydrid für eine längere Dauer hydrophobiert und anschließend getrocknet. An dem fertiggestellten Formkörper ist ein Haken **4** angebracht, welcher als Vorrichtung für die spätere Aufnahme des Absorptionsmittels genutzt werden kann.

Der fertig gestellte Formkörper **1** mit dem daran befestigten Haken **4** kann sodann als Einzelobjekt oder in größerer Anzahl eingesetzt werden. Dabei nimmt derselbe beim Absorptionsvorgang folgende Stellungen ein:
a) Der so gewonnene Formkörper **1** schwimmt auf Wasser mit einer eindeutig zu erkennenden Orientierung. Dabei ragt bei einem neuen Formkörper **1** die Spitze **2** über der Wasseroberfläche **5** heraus, während die Basis **3** mit dem Haken **4** unterhalb der Wasseroberfläche **5** liegt.
b) Wird der Formkörper **1** mit einem zu absorbierenden Stoff, beispielsweise mit Öl (z. B. Heizöl EL nach DIN 51603-1) getränkt, ändert sich dessen Orientierung mit zunehmendem Absorptionsgrad. Die Spitze **2** des Formkörpers **1** taucht zunehmend mehr unter die Wasseroberfläche **5**. Dabei wird der Haken **4** aus dem Wasser heraus gehoben und kann so mit Handhabungsmitteln erfasst werden.

Durch die eindeutig erkennbaren unterschiedlichen Lagen können frisch eingesetzte Formkörper von solchen, deren Absorptionsgrad einem Maximum entgegen geht, visuell unterschieden werden.

Der Haken **4** kann mit dem Ziel, eine Handhabung der Formkörper **1** zu gewährleisten, aus einem beliebigen Werkstoff hergestellt sein. Insoweit kommen Kunststoffe ebenso in Betracht, wie Metallhaken.

Es ist weiterhin möglich, anstelle des Hakens **4** lediglich einen Stift einzusetzen.

Eine weitere Möglichkeit besteht darin, einen nicht über die Basis hinausragenden Stift aus einem magnetisierbaren oder magnetischen Werkstoff einzusetzen. Bei dieser Ausführungsform des Formkörpers **1** ist es möglich, diese mit Hilfe magnetisch wirkender bzw. magnetisierbarer Einrichtungen aufzusammeln.

Ein wie oben beschrieben hergestellter Formkörper kann so ausgeführt werden, dass während seiner Herstellung lokal Sand, Kalk, keramisches Pulver, Schwerspat, Ton, getrocknete Pflanzenteile, Holzmehl, Sägespäne, pulverförmige Substanzen oder dergleichen zugefügt werden. Erfolgt die Herstellung des Formkörpers durch Wickeln aus Bahnen, kann die Beifügung der genannten Stoffe während des Wickelns erfolgen.

Wird bei der Herstellung die Beimengung partiell unterschiedlich ausgeführt, kann in den gefüllten Bereichen die Dichte des Formkörpers erhöht werden. Zugleich kann durch Abstimmung der einzelnen Maßnahmen während des Herstellungsprozesses der Formkörper ein solcher Formkörper auch hergestellt werden, indem in Bereichen, in denen die bezeichneten Stoffe zugegeben werden, weniger Faser- oder Bahnmaterial eingesetzt wird. Dies ist letztlich eine Frage der Optimierung des Herstellungsprozesses.

Es ist weiterhin möglich, den wie oben hergestellten Formkörper so auszuführen, dass ihm lokal geschäumtes oder aufschäumbares Polystyren zugeführt wird.

Es ist möglich, das Polystyren mit einem niedrig siedenden Lösungsmittel versetzt einzubringen. Dann wird beim nachfolgenden Trocknungsprozess das Polystyren aufgeschäumt und damit zugleich in den polystyrenhaltigen Bereichen des Formkörpers die Dichte erniedrigt.

Auch durch diese Maßnahme können Dichteunterschiede innerhalb des Formkörpers erreicht werden.

Die bereits beschriebene Ausstattung der Formkörper mit Füllstoffen, wie Sand, Kalk oder Schwerspat sowie mit Polystyren kann auch kombiniert angewendet werden.

Ebenso ist es möglich, andere granuläre Absorptionsmittel während des Herstellungsprozesses der Formkörper zuzuführen. In Frage kommen dabei natürliche oder weitgehend naturbelassene Absorptionsmittel, wie Torf, Sägemehl, Sägespäne, zerkleinertes Heu, Stroh, Rindenschnitzel oder Seegras.

Eine weitere bevorzugte Ausführungsform der Formkörper entsteht dadurch, dass diese als Wickelkörper hergestellt werden und während des Wickelns ein Baumwollgewebe mit eingewickelt wird. Dadurch steigt die Stabilität des Formkörpers, ohne dass dessen Absorptionsvermögen nachteilig beeinflusst wird.

### Bezugszeichenliste

- 1: Formkörper
- 2: Spitze des Formkörpers
- 3: Abgeflachte Basis
- 4: Haken
- 5: Wasseroberfläche

## Patentansprüche

1. Absorptionsmittel, das den Sättigungsgrad anzeigt,
das auf einer Wasseroberfläche (5) schwimmfähig ist,
das ein Formkörper (1) ist,
das wenigstens zwei Bereiche enthält, deren Dichten sich bei Aufnahme einer Substanz bzw. Substanzmischung unabhängig voneinander und in unterschiedlichem Maße ändern,
wobei es nach der Menge an aufgenommener Substanz diskriminierbar ist, dabei seine Orientierung in Bezug auf die Wasseroberfläche (5), auf der sich das Absorptionsmittel befindet, durch Aufnahme der Substanz oder Substanzmischung verändert wird und zu einer detektierbaren Änderung der Orientierung desselben führt, die als Änderung des Neigungswinkels einer durch die Geometrie des Körpers definierten Achse oder Ebene im Bezug auf die Erdoberfläche zu verstehen ist,
**dadurch gekennzeichnet, dass**
es aus Materialien besteht, welche in verschiedenen Bereichen unterschiedliche Porosität aufweisen und/oder
es aus Materialien besteht, welche in verschiedenen Bereichen unterschiedlich dicht gepackt sind und/oder
es aus Materialien besteht, welchen in verschiedenen Bereichen unterschiedliche Volumenanteile eines Füllmaterials zugemengt sind,
es ei-, ellipsoid-, kegel-, kugel-, pyramiden-, tropfen- oder zylinderförmig ist, und in seiner Gesamtheit hydrophobiert ist.

2. Absorptionsmittel nach Patentanspruch 1, **dadurch gekennzeichnet, dass** es eine Vorrichtung enthält, welche ein automatisches Absammeln des Absorptionsmittels ermöglicht.

3. Absorptionsmittel nach Patentanspruch 2, **dadurch gekennzeichnet, dass** die Vorrichtung ein Draht, ein Stäbchen, ein Haken (4), eine Öse oder ein magnetisches bzw. magnetisierbares Material ist.

4. Absorptionsmittel nach einem der Patentansprüche 1 bis 3, **dadurch gekennzeichnet, dass** das Füllmaterial Sand, Hohlkörper, Schaumkörper und/oder aufschäumbare Stoffe verwendet sind.

5. Absorptionsmittel nach einem der Patentansprüche 1 bis 4, **dadurch gekennzeichnet, dass** es aus verschiedenen Schichten und/oder Bahnen aufgebaut ist.

6. Absorptionsmittel nach Patentanspruch 1, **dadurch gekennzeichnet, dass** es aus aufgewickelten Bahnen aufgebaut ist.

7. Absorptionsmittel nach einem der Patentansprüche 1 bis 6, **dadurch gekennzeichnet, dass** die Bereiche und/oder Schichten und/oder Bahnen aus Fasermaterial bestehen.

8. Absorptionsmittel nach einem der Patentansprüche 1 bis 7, **dadurch gekennzeichnet, dass** es aus Cellulose besteht.

9. Absorptionsmittel nach einem der Patentansprüche 1 bis 8, **dadurch gekennzeichnet, dass** es in verschiedenen Bereichen eine verschiedene Benetzbarkeit und/oder Quellbarkeit aufweist.

10. Absorptionsmittel nach einem der Patentansprüche 1 bis 9, **dadurch gekennzeichnet, dass** es von einer Hülle aus Gewebe, Gewirke, Fasern oder gelochter Folie umgeben ist.

11. Absorptionsmittel nach einem der Patentansprüche 1 bis 10, **dadurch gekennzeichnet, dass** es in seinem Inneren Gewebe, Gewirke, Fasern oder Folie enthält.

## Claims

1. Absorbent means which indicates the degree of saturation,
which can float on a water surface (5),
which is a moulded body (1), which
contains at least two areas, the densities of which change independently of each other and to a different degree on taking up a substance or mixture of substances,
wherein it can be discriminated according to the quantity of taken up substance, whereby its orientation in relation to the water surface (5) on which the absorbent means is located, is changed through taking up the substance or substance mixture and leads to a detectable change in the orientation thereof which is to be understood as a change in the angle of inclination of an axis or plane defined by the geometry of the body in relation to the surface of the Earth,
**characterised in that**
it comprises materials which have a different porosity in different areas and/or it comprises materials which are packed in different densities in different areas and/or
it comprises materials which have different volumetric portions of a filling material added in different areas,
it is egg-shaped, ellipsoid, conical, spherical, pyramidal, drop-shaped or cylindrical
and is hydrophobised in its entirety.

2. Absorbent means according to claim 1 **characterised in that** it contains a device which allows automatic collection of the absorbent means.

3. Absorbent means according to claim 2 **characterised in that** the device is a wire, a rod, a hook (4), an eye or a magnetic or magnetisable material.

4. Absorbent means according to any one of claims 1 to 3 **characterised in that** the filling material sand, hollow bodies, foam bodies and/or foamable substances are used.

5. Absorbent means according to any one of claims 1 to 4 **characterised in that** it is built up of various layers and/or webs.

6. Absorbent means according to claim 1 **characterised in that** it is built up of wound up webs.

7. Absorbent means according to any one of claims 1 to 6 **characterised in that** the area and/or layers and/or webs comprise fibre material.

8. Absorbent means according to any one of claims 1 to 7 **characterised in that** it consists of cellulose.

9. Absorbent means according to any one of claims 1 to 8 **characterised in that** in various areas it exhibits a different wettability and/or swelling ability.

10. Absorbent means according to any one of claims 1 to 9 **characterised in that** it is surrounded by a sleeve of woven fabric, knitted fabric, fibres or perforated film.

11. Absorbent means according to any one of claims 1 to 10 **characterised in that** it in its interior it comprises woven fabric, knitted fabric, fibres or perforated film.

## Revendications

1. Absorbant, indiquant le taux de saturation,
Qui est susceptible de flotter sur une surface d'eau (5), qui est un corps moulé (1) qui
contient au moins deux zones, dont les densités varient indépendamment l'une de l'autre et dans une mesure différente, lors du captage d'une substance ou d'un mélange de substances
sachant qu'il est discriminable en fonction de la quantité de substance captée, qu'à cet effet son orientation en rapport à la surface d'eau (5) sur laquelle se trouve l'absorbant varie par captage de la substance ou du mélange de substances et mène à une modification détectable de l'orientation de celui-ci, qui doit être considérée comme une modification de l'angle d'inclinaison d'un axe ou d'un plan défini par la géométrie du corps en rapport à la surface du sol, **caractérisé en ce**
**qu'**il est constitué de matières qui dans différentes zones font preuve d'une porosité différente et/ou
**qu'**il est constitué de matières qui dans différentes zones sont d'une densité différente et/ou
**qu'**il est constitué de matières auxquelles dans différentes zones sont mélangées différentes parts en volume d'une matière de charge, en ce qu'il est de forme ovale, ellipsoïdale, conique, sphérique, pyramidale ou cylindrique et imperméabilisé dans sa totalité.

2. Absorbant selon la revendication 1, **caractérisé en ce qu'**il contient un dispositif qui permet à l'absorbant de s'amasser.

3. Absorbant selon la revendication 2, **caractérisé en ce que** le dispositif est un fil métallique, une baguette, un crochet (4), un oeillet ou une matière magnétique ou susceptible d'être magnétisée.

4. Absorbant selon l'une quelconque des revendications 1 à 3, **caractérisé en ce que** la matière de charge sont utilisés du sable, des corps creux, des corps en mousse et/ou des substances expansibles.

5. Absorbant selon l'une quelconque des revendications 1 à 4, **caractérisé en ce qu'**il est conçu en différentes couches et/ou bandes.

6. Absorbant selon la revendication 1, **caractérisé en ce qu'**il est conçu en bandes enroulées.

7. Absorbant selon l'une quelconque des revendications 1 à 6, **caractérisé en ce que** les zones et/ou couches et/ou bandes sont constitués d'une matière fibreuse.

8. Absorbant selon l'une quelconque des revendications 1 à 7, **caractérisé en ce qu'**il est constitué de cellulose.

9. Absorbant selon l'une quelconque des revendications 1 à 8, **caractérisé en ce que** dans différentes zones, il fait preuve d'une différente mouillabilité et/ou aptitude au gonflement.

10. Absorbant selon l'une quelconque des revendications 1 à 9, **caractérisé en ce qu'**il est entouré d'une enveloppe en tissu, en maillage, en fibres ou en film performé.

11. Absorbant selon l'une quelconque des revendications 1 à 10, **caractérisé en ce qu'**en son intérieur, il contient un tissu, un maillage, des fibres ou un film.
